Europäisches Patentamt

**European Patent Office**

**Office européen des brevets**

(11) Publication number: **0 025 183**

**B1**

(12) **EUROPEAN PATENT SPECIFICATION**

(45) Date of publication of patent specification: **31.08.83**

(21) Application number: **80105094.9**

(22) Date of filing: **27.08.80**

(51) Int. Cl.³: **B 60 C 15/02, B 60 C 11/14, B 60 C 27/20, B 62 D 55/24**

(54) Track belt with flexible track shoes and/or anchor plates.

(30) Priority: **11.09.79 PC T/US79/00737**

(43) Date of publication of application: **18.03.81 Bulletin 81/11**

(45) Publication of the grant of the patent: **31.08.83 Bulletin 83/35**

(84) Designated Contracting States: **DE FR GB IT**

(56) References cited:
US - A - 3 606 921
US - A - 3 773 394
US - A - 3 857 617
US - A - 3 899 220
US - A - 4 057 302
US - A - 4 071 068
US - A - 4 132 258
US - A - 4 145 092

(73) Proprietor: **CATERPILLAR TRACTOR CO.**
**100 Northeast Adams Street**
**Peoria Illinois 61629 (US)**

(72) Inventor: **Grawey, Charles Edward**
**210 East Orchard Place**
**Peoria Illinois 61603 (US)**

(74) Representative: **Wagner, Karl H., Dipl.-Ing.**
**P.O. Box 22 02 46 Gewuerzmuehlstrasse 5**
**D-8000 München 22 (DE)**

Courier Press, Leamington Spa, England.

Track belt with flexible track shoes and/or anchor plates

## Technical field

This invention relates generally to a track shoe for use with a flexible track belt to a tire carcass and, more particularly, to a track shoe connected to the track belt by an anchor plate wherein at least the track shoe or the anchor plate is flexible.

## Background art

Replaceable, flexible belt structures have been developed for use with pneumatic tire carcasses. To these belts are attached track or wear shoes which provide added traction, improved flotation and increased resistance to tire failure. These flexible track belts are circumferentially inextensible about the periphery of the tire carcass and include a cylindrical elastomeric belt with a central core or ply of reinforcing material thereon. Track shoes or wear shoes are attached on the outer periphery of the flexible belt transversely thereto at equally spaced circumferential intervals by keeper bars or anchor plates nested in slots on the inner periphery of the belt. These anchor plates or keeper bars may be molded into the belt. An exemplary track belt construction is shown in Grawey et al U.S.—A—3,899,220 issued August 12, 1975 entitled "Flexible Sealed Track Belt" and an exemplary tire carcass construction is shown in Grawey U.S.—A—3,606,921 issued September 21, 1971 entitled "Belted Oval Pneumatic Tube-Tire".

It has been a practice to provide the rubber wear shoes with a rigid metal backing. The rubber wear shoe is then mounted on the anchor plates or keeper bars and secured thereto. However, the pressure placed upon the rigid metal backing during use causes the backing to flex. This flexing creates fatigue within the backing often causing cracking of the backing. The metal backing could be increased in size, i.e. thickness, but the weight and cost of doing so is relatively prohibitive. In Olsen U.S.—A—4,071,068 issued January 31, 1978 entitled "Removable Track Belt with Removable Keeper Bar", a rigid track shoe is bolted to a rigid anchor plate nested in the track belt. In use, the rigid track shoes with the rigid anchor plates are subject to some flexing, resulting in fatigue and failure of the shoes and/or anchor plates.

## Disclosure of invention

The present invention is directed to overcoming one or more problems as set forth above.

In one aspect of the present invention, a flexible track shoe for a flexible track belt assembly comprises:

an elastomeric body having a pair of side portions;

a pair of spaced mounting blocks anchored in said elastomeric body, each mounting block being positioned generally in said side portions; and

reinforcing means extending between said mounting blocks and fixed thereto to retain said mounting blocks against outward movement relative to each other.

Another aspect of the invention provides for a flexible anchor plate for a flexible track belt assembly comprising:

an elastomeric body having a pair of side portions;

a pair of spaced mounting blocks anchored in said elastomeric body, each mounting block being positioned generally in said side portions; and

reinforcing means extending between said mounting blocks and fixed thereto to retain said mounting blocks against outward movement relative to each other.

A third aspect of the invention provides for a track belt assembly for a circular pneumatic carcass, a flexible track belt encircling said carcass and being operatively connected thereto; a set of anchor plates carried by said track belt and a set of track shoes attached to said anchor plates and projecting radially outward from said carcass, being characterized by

at least one of said sets of anchor plates or track shoes being as claimed in any of claims 1—7.

Other preferred embodiments of the invention are disclosed in the dependent claims.

The provision of reinforcing means in the track shoe binds the mounting blocks together against the resilient material therebetween to resist movement of the blocks relative to each other, yet permits overall flexibility of the track shoe for improved function.

Reinforcing means in both the track shoes and the anchor plates permits a greater degree of flexibility to the construction, thereby reducing track shoe and anchor plate failure.

The reinforcing means in the anchor plates permits a greater degree of flexibility in the anchoring, thereby reducing anchor plate fatigue and failure.

## Brief description of drawings

Fig. 1 is an exploded sectional view illustrating the relationship between an improved flexible track shoe, a track belt with anchor plates and a tire carcass;

Fig. 2 is a top, broken apart, plan view of an embodiment of the flexible track shoe of Fig. 1 partially broken away to show the interior structure thereof;

Fig. 3 is a side, broken apart, elevational view taken along the line 3—3 of Fig. 2 and partially broken away to show the interior structure thereof;

Fig. 4 is an exploded side elevational view taken along the line 4—4 of Fig. 1;

Fig. 5 is an exploded apart perspective view of a portion of a tire incorporating the elements of Fig. 1;

Fig. 6 is a partial sectional view of a second embodiment of the invention showing the flexible track shoe, partially broken away, a flexible anchor plate, a track belt and a tire carcass;

Fig. 7 is an exploded view of the elements of Fig. 6;

Fig. 8 is an exploded apart perspective view of a portion of a tire incorporating the elements of Fig. 6;

Fig. 9 is a top, broken apart, plan view of the flexible anchor plate of Fig. 6 partially broken away;

Fig. 10 is a side, broken apart, elevational view taken along the line 10—10 of Fig. 9;

Fig. 11 is a partial sectional view of a third embodiment of the invention showing a rigid track shoe, a flexible anchor plate, a track belt, and a tire carcass; and

Fig. 12 is an exploded apart perspective view of a portion of a tire incorporating the elements of Fig. 11.

Best mode for carrying out the invention

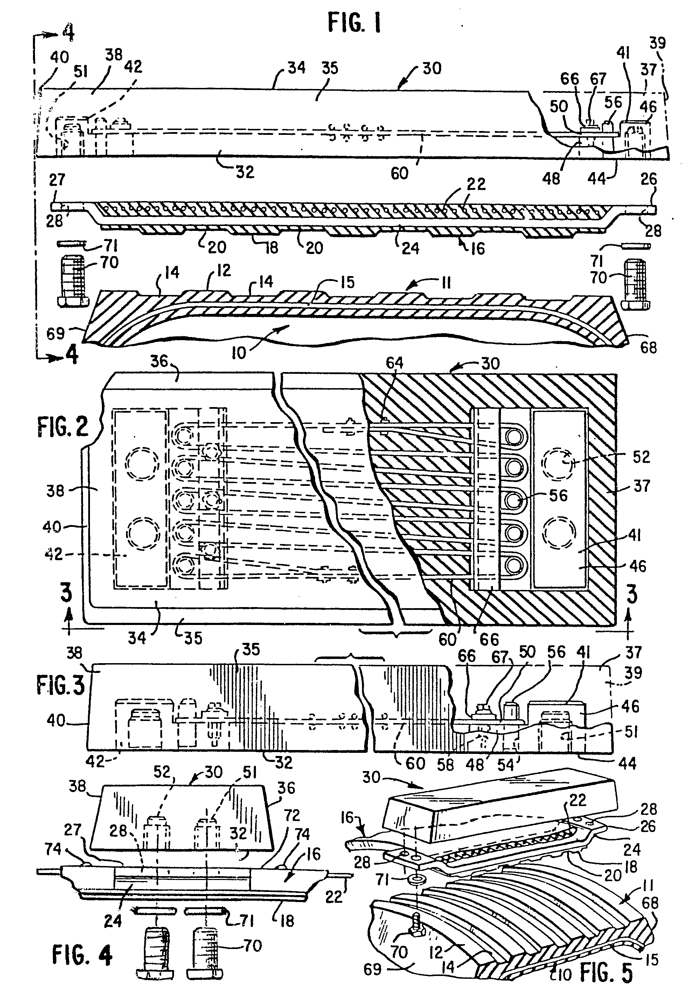

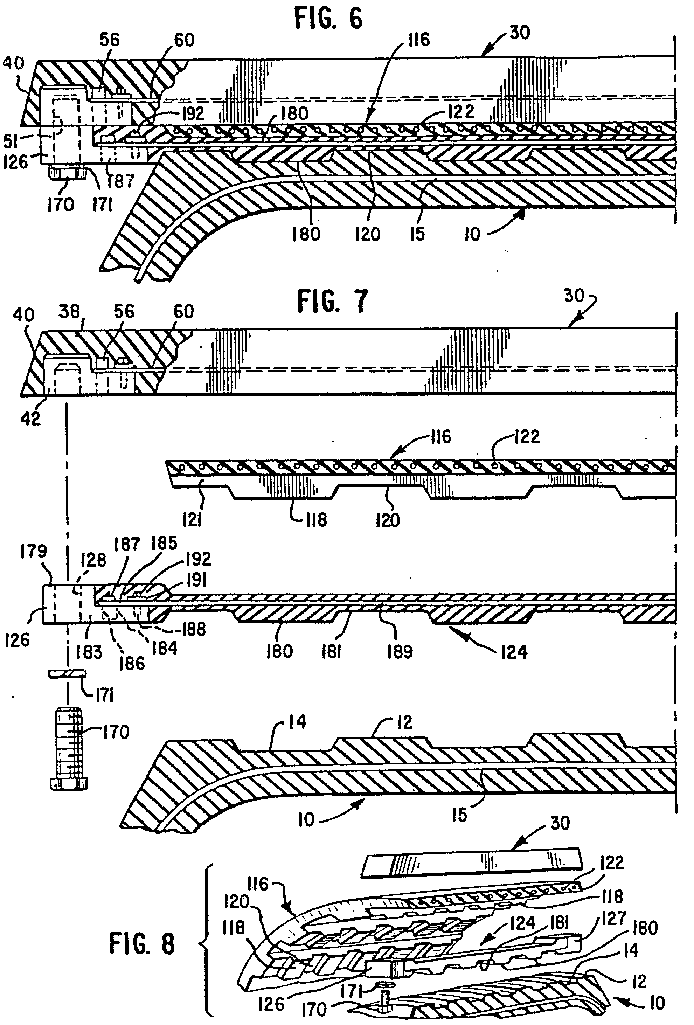

Referring to Figs. 1 through 5, and at the outset to Fig. 5, a pneumatic tire carcass 10 has a circumferential tread 11 defined by spaced lands 12 and valleys 14 around the circumferential periphery thereof. A reinforcing cable 15 is embedded in the material of the carcass. A cylindrically-shaped, flexible track belt 16 encircles the carcass 10 and has lands 18 and valleys 20 on the inner surface thereof which interfit with the lands 12 and valleys 14 on the carcass 10. The track belt 16 has a plurality of circumferential inextensible reinforcings, such as cables, fiberglass, or the like, 22 embedded in the cured elastomer of the belt 16. At equally spaced apart circumferential locations in the belt 16, anchor plates or keeper bars 24 are embedded or bonded in the cured elastomer of the belt on the radially inward side of the cables 22. The anchor plates 24 have offset end portions 26, 27 through which apertures 28 extend. It is to be understood that the anchor plates 24 could be separate from the track belt 16 wherein they would seat in transverse grooves in the inner surface of the track belt.

Referring to Figs. 2 and 3, an elongate, generally rectangular track shoe or wear shoe 30 is shown and has an elastomeric or rubber body defined by an inner mounting surface 32, an outer working surface 34, tapered leading and trailing surfaces 35 and 36 and side portions 37 and 38 having tapered side surfaces 39 and 40.

Bonded internally within the side portions 37, 38 of the body of the wear shoe 30 are mounting blocks 41 and 42, respectively. Since each of the mounting blocks 41 and 42 are similarly constructed, only mounting block 41 will be described in detail. The mounting block 41 has a height less than that of the wear shoe 30 and is positioned therein with its lower surface 44 flush with the inner mounting surface 32 of the wear shoe 30 and with the upper surface of the mounting block 41 spaced from the outer working surface 34 of the shoe. The mounting block 41 has an enlarged outward portion 46 and a laterally inward stepped down or reduced height portion 48 defining a horizontal support surface 50. Formed through the bottom of the enlarged portion 46 are a pair of threaded bores 51 and 52 for a purpose to be described hereinafter. Formed in the stepped down portion 48, adjacent the enlarged portion 46, are a plurality of spaced bores, each designated 54. Inserted in the bores 54 are a series of studs or dowels, each designated 56. Formed laterally inward of the bores 54 and dowels 56 are a plurality of spaced threaded bores, each designated 58.

A length of reinforcing 60, such as cable, fiberglass, or the like, extends transversely between the mounting blocks 41 and 42 and winds back and forth around the dowels 56 between the mounting blocks 41 and 42. The ends of the reinforcing 60 are terminated and secured by suitable means, such as clamps 64. It should be understood that the clamps 64 could be eliminated since adhesion of the rubber would probably be sufficient to hold the reinforcing ends. The dowels 56 are cylindrical to facilitate the winding of the reinforcing 60 thereabout. The reinforcings are retained on the surface 50 by an elongate bar-shaped keeper 66 which is secured to the mounting block 41 by bolts 67 threaded into the bores 58 and is operative to clamp the reinforcing 60 between the keeper 60 and the support surface 50.

The reinforcing 60 is flexible enough to permit bending and deformation to some extent of the wear shoe 30, but provides tensile strength sufficient to prevent the wear shoe 30 from substantial longitudinal stretching and thereby holds the spacing between the mounting blocks 41 and 42 at some predetermined maximum distance. It is understood that if a high tensile strength rubber were used in constructing the wear shoe 30, the reinforcing 60 could be eliminated.

Referring to Figs. 1 and 4, the attachment of the resilient wear shoes 30 to the pneumatic tire carcass 10 by means of the flexible track belt 16 and anchor plates 24 is illustrated. The track belt 16, with the spaced apart anchor plates 24, encircles the carcass 10 so that upon inflation of the carcass 10, the lands 12 and valleys 14 of the carcass 10 will interfit with the lands 18 and valleys 20 in the belt 16 with the end portions 26, 27 of the anchor plates 24 extending outwardly from the side walls 68, 69 of the carcass 10. It is understood that the circumferential lands 18 raised from the inner periphery of the track belt 16 and mating with the valleys 14 formed in the tread surface 11 of the carcass fixedly stabilize the lateral position of the track belt 16 thereon. Since the anchor plates or keeper bars 24 shown herein are preferably integrally formed with the track belt 16, the anchor plates or keeper bars 24 will be properly spaced thereabout, when the track belt 16 is fully seated on the tire carcass 10.

The track shoes or wear shoes 30 are mounted to the anchor plates or keeper bars 24 and to the tire carcass 10 by bolts 70 extending through washers 71, through the apertures 28 in the anchor plates 24 and into the respective threaded bores 51 and 52 of the flexible wear shoe mounting blocks 41, 42.

As seen in Fig. 4, the wear shoe sites or locations 72 on the exterior of the track belt 16 are separated by transverse ribs 74. The inner mounting surface 32 of the wear shoe 30 rests against the flat wear shoe site or location 72 with its leading and trailing surfaces 35 and 36 abutting the ribs 74 to provide a seal and to prevent the ingress of soil and rock under the wear shoes 30.

Referring to Figs. 6 through 10, and initially particularly to Figs. 6 through 8, a second embodiment of the invention is shown and includes the tire carcass 10, as described above, about which a cured elastomer track belt 116 is positioned. The track belt 116 has a plurality of circumferential inextensible reinforcings 122 embedded therein. Spaced apart lands 118 and valleys 120 are formed about the inner surface of the belt 116 with transversely extending spaced apart slots 121 intersecting said lands 118 and valleys 120. Flexible anchor plates 124, which will be described in detail hereinafter, seat in the slots 121 and have spaced side portions 126, 127 (Fig. 8) extending outward beyond the edges of the track belt 116. The anchor plates 124 have lands 180 and valleys 181, which are the same size and configuration as the lands 118 and valleys 120 on the belt 116, so that with the anchor plates 124 seated in the slots 121, continuous lands 118, 180 and valleys 120, 181 will be presented radially inward toward the carcass 10. Inflation of the carcass 10 with the track belt 116 and anchor plates 124 around the outer periphery thereof will seat the lands 118, 180 and valleys 120, 181 in the valleys 14 and lands 12 of the carcass 10, as described above with respect to Figs. 1 through 5.

Flexible wear shoes 30, of the same construction as described above with respect to Figs. 1 through 5, are bolted to the anchor plates 124 by means of bolts 170 passing through washers 171, apertures 128 in the side portions 126, 127 of the anchor plates 124 and are threaded into the mounting blocks 41, 42 of the wear shoes 30.

Each flexible anchor plate 124, as best shown in Figs. 7, 9 and 10, is comprised of spaced apart mounting blocks 182, 183, which form the side portions 126, 127 and have enlarged outward portions 179 and stepped down portions 184 with a support surface 185 thereon. A plurality of aligned, spaced bores 186 are formed in the surface 185 with a stud or dowel 187 seated in each bore 186. A plurality of aligned, spaced bores 188, spaced inwardly from bores 186, are formed in the surface 185. An elongate, inextensible reinforcing 189, such as a cable, fiberglass, or the like, extends between the blocks 182, 183 and winds about the dowels 187 on the support surface 185. The ends of the reinforcing 189 are secured as by embedding in the cured elastomer, or may be clamped, or the like. A keeper 191 overlaps the reinforcing 189 and is anchored to the blocks 182, 183 by bolts 192 threaded into the bores 188 to secure the blocks 182, 183 together. The blocks 182, 183 are loaded to place the reinforcing 189 under tension as the elastomer of the anchor plate 124 is formed and cured.

The reinforcing 189 is flexible enough to permit bending and deformation, to some extent, of the anchor plate 124, but provides tensile strength sufficient to prevent the anchor plate 124 from substantial longitudinal stretching and thereby holds the spacing between the blocks 182, 183 at some predetermined maximum distance. The carcass 10 will have flexible anchor plates 124 anchoring flexible wear shoes 30 which will provide maximum flexibility while retaining the strength and toughness required.

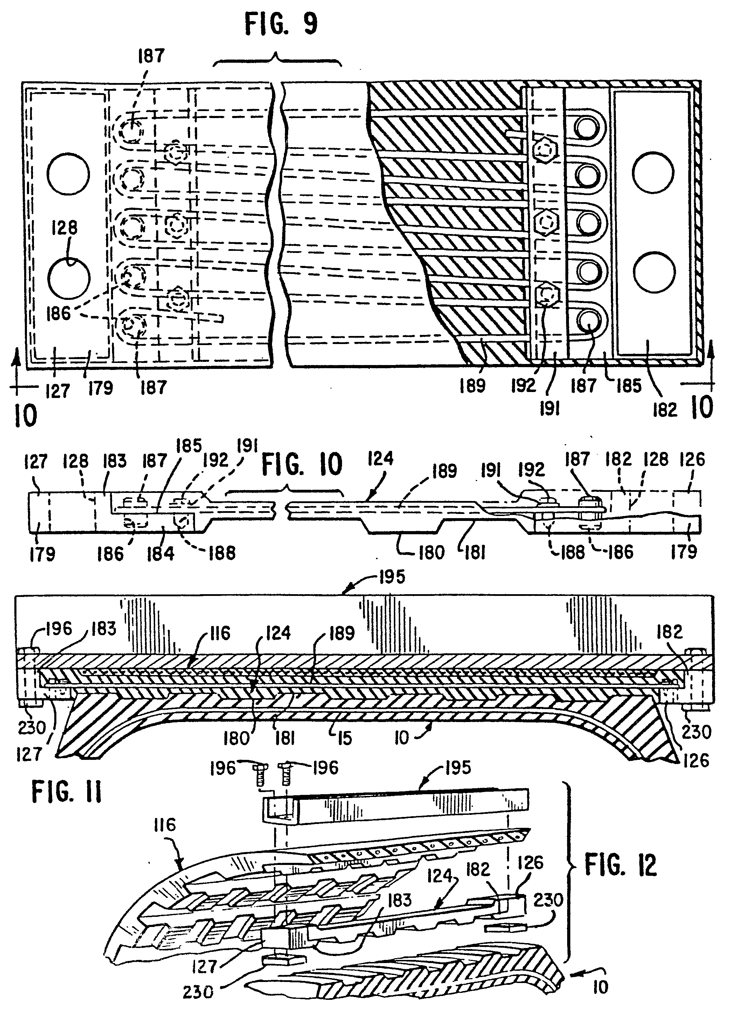

In Figs. 11 and 12, a third modification is shown, wherein a carcass 10, as described with respect to Figs. 1 through 5, has a flexible track belt 116 and a plurality of flexible anchor plates 124, both as described with respect to Figs. 6 through 10, to which a plurality of rigid wear shoes 195 are secured as by bolts 196 passing through the wear shoe 195, through the mounting blocks 182, 183 and into a threaded tapping block 230 overlapping the underside of the side portions 126, 127 of the flexible anchor plate 124. Each rigid wear shoe 195, being mounted to the carcass 10 through the flexible anchor plate 124, is provided with sufficient flexibility that the wear shoe is not overstressed and is not subject to fatigue caused by too rigid a mounting thereby substantially eliminating failure of the rigid wear shoe 195.

Industrial applicability

A removable track belt assembly is provided for a tire carcass and includes a continuous circumferential track belt which has anchor plates to which track shoes are mounted. At least the track shoes or the anchor plates are made with a flexing characteristic so as to reduce or eliminate fatiguing and breaking of the rigid shoes and rigid anchor plates.

The first embodiment, such as shown in Figs. 1 through 5, has flexible wear shoes 30 attached to the carcass 10 through the flexible track belt 16 and rigid anchor plates 24. The flexible wear shoes 30 have sufficient tensile loading that they can carry the loads and provide the traction needed for the tire without fatiguing, cracking and/or failing as could happen with the rigid wear shoes mounted on rigid anchor plates.

In operation, the flexible wear shoes 30 receive compressive loads as the track belt 16 rolls along the ground and pressure is placed upon the individual wear shoes 30 which support the weight of the vehicle. However, the inextensible reinforcing 60 in the shoes will prevent lateral displacement of the mounting blocks 41 and 42 away from one another and hence movement relative to the anchor plate 24 while permitting overall flexibility of the flexible wear shoes 30 to provide traction and the like. The reinforcing 60 provides the shoe 30 with the strength and toughness required while being flexible and relatively lightweight.

The second embodiment, as shown in Figs. 6 through 10, has a flexible wear shoe 30 mounted on the carcass 10 by a flexible anchor plate 124 and a flexible track belt 116. The flexible wear shoe 30 and anchor plate 124 afford the strength and durability required without the fatigue failures experienced heretofore.

The third embodiment, as shown in Figs. 11 and 12, has a rigid wear shoe 195 mounted on the carcass 10 by means of a flexible track belt 116 and a flexible anchor plate 124. The rigid shoes 195 afford positive traction for the tire as the flexible anchor plates 124 provide a flexible anchor to accommodate for stresses and uneven loadings that could cause failure in a rigidly mounted rigid wear shoe 195.

Other aspects, objects and advantages of this invention can be obtained from a study of the drawings, the disclosure and the appended claims.

## Claims

1. A flexible track shoe (30) for a flexible track belt assembly comprising:

an elastomeric body having a pair of side portions (37, 38);
a pair of spaced mounting blocks (41, 42) anchored in said elastomeric body, each mounting block (41, 42) being positioned generally in said side portions (37, 38, 126, 127); and
reinforcing means (60) extending between said mounting blocks (41, 42) and fixed thereto to retain said mounting blocks (41, 42) against outward movement relative to each other.

2. A flexible anchor plate (124) for a flexible track belt assembly comprising:

an elastomeric body having a pair of side portions (126, 127);
a pair of spaced mounting blocks (182, 183) anchored in said elastomeric body, each mounting block (182, 183) being positioned generally in said side portions (126, 127); and
reinforcing means (189) extending between said mounting blocks (182, 183) and fixed thereto to retain said mounting blocks (182, 183) against outward movement relative to each other.

3. A flexible track shoe (30) or anchor plate (124) as claimed in claim 1 or 2, wherein said reinforcing means is a flexible tensioning means (60, 189).

4. A flexible track shoe (30) or anchor plate (124) as claimed in claim 3, wherein said flexible tensioning means is an inextensible material (60, 189).

5. A flexible track shoe (30) or anchor plate (124) as claimed in claim 1 or 2, wherein said reinforcing means is an inextensible cable (189, 60).

6. A flexible track shoe (30) or anchor plate (124) as claimed in any of claims 1—5, wherein each mounting block (41, 42, 182, 183) includes a plurality of dowel members (56, 187) mounted thereon, securing means (66, 67, 191, 192) attachable to said mounting blocks (41, 42, 182, 183), said reinforcing means (60, 189) being wound back and forth between said dowel members (56, 187) of the respective mounting blocks (41, 42, 182, 183) and being fixedly held thereon by said securing means (66, 67, 191, 192).

7. A flexible track shoe (30) or anchor plate (124) as claimed in any of claims 1—6, wherein each of said mounting blocks (41, 42, 182, 183) includes an enlarged outward portion (46, 179) having anchoring means (51, 52, 128) therein, and a stepped down inward portion (48, 184) defining a support surface (50, 185) for said reinforcing means from which said dowel members (56, 187) extend.

8. A track belt assembly for a circular pneumatic carcass (10), a flexible track belt (16, 116) encircling said carcass (10) and being operatively connected thereto; a set of anchor plates (24, 124) carried by said track belt (16, 116) and a set of track shoes (30, 195) attached to said anchor plates (24, 124) and projecting radially outward from said carcass (10), characterized by at least one of said sets of anchor plates (124) or track shoes (30) being as claimed in any of claims 1—7.

9. A track belt assembly as claimed in claim 8, wherein each said anchor plate (24) is rigid and each said track shoe (30) is flexible.

10. A track belt assembly as claimed in claim 8, wherein each said track shoe (195) is rigid and each said anchor plate (124) is flexible.

11. A track belt assembly as claimed in claim 8, wherein each said track shoe (30) and each said anchor plate (124) is flexible.

## Patentansprüche

1. Flexibler Kettenschuh (30) für eine flexible Gleiskettenanordnung, wobei der Schuh folgendes aufweist:

einen Elastomerkörper mit einem Paar von Seitenteilen (37, 38);

ein Paar von mit Abstand angeordneten Befestigungsblöcken (41, 42), verankert in dem Elastomerkörper, wobei jeder Befestigungsblock allgemein in den erwähnten Seitenteilen (37, 38, 126, 127) positioniert ist, und

Verstärkungsmittel (60), die sich zwischen den Befestigungsblöcken (41, 42) erstrecken und daran befestigt sind, um die Befestigungsblöcke (41, 42) gegenüber einer Auswärtsbewegung bezüglich einander zu halten.

2. Flexible Ankerplatte (124) für eine flexible Gleiskettenanordnung mit:

einem Elastomerkörper mit einem Paar von Seitenteilen (126, 127),

einem Paar von mit Abstand angeordneten Befestigungsblöcken (182, 183), verankert in dem Elastomerkörper, wobei jeder Befestigungsblock (182, 183) im ganzen in den erwähnten Seitenteilen (126, 127) angeordnet ist, und mit Verstärkungsmitteln (189), die sich zwischen den Befestigungsblöcken (182, 183) erstrecken und daran befestigt sind, um die Befestigungsblöcke (182, 183) gegenüber einer Auswärtsbewegung bezüglich einander zu halten.

3. Flexibler Kettenschuh (30) oder Ankerplatte (124) nach Anspruch 1 oder 2, wobei die Verstärkungsmittel flexible Spannmittel (160, 189) sind.

4. Flexibler Kettenschuh (30) oder Ankerplatte (124) nach Anspruch 3, wobei die flexiblen Spannmittel en nicht ausdehnbares Material (60, 189) sind.

5. Flexibler Kettenschuh (30) oder Ankerplatte (124) nach Anspruch 1 oder 2, wobei die Verstärkungsmittel ein nicht ausdehnbares Kabel (189, 60) sind.

6. Flexibler Kettenschuh (30) oder Ankerplatte (124) nach einem der Ansprüche 1—5, wobei jeder Befestigungsblock (41, 42, 182, 183) eine Vielzahl von darinnen befestigten Bügelgliedern (56, 187) aufweist, an dem Befestigungsblock (41, 42, 182, 183) befestigbare Befestigungsmittel (66, 67, 191, 192), und wobei die Verstärkungsmittel (60, 189) zwischen den Bügelgliedern (56, 187) der entsprechenden Befestigungsblöcke (41, 42, 182, 183) hin und her gewickelt sind und durch die Befestigungsmittel (66, 67, 191, 192) fest darauf gehalten werden.

7. Flexibler Kettenschuh (30) oder Ankerplatte (124) nach einem der Ansprüche 1—6, wobei jeder der Befestigungsblöcke (41, 42, 182, 183) einen verbreiterten Außenteil (46, 179) mit darin vorgesehenen Ankermitteln (51, 52, 128) aufweist, und ferner einen abgestuften Innenteil (48, 184), der eine Tragoberfläche (50, 185) für die Verstärkungsmittel bildet, von denen sich die Bügelglieder (56, 187) aus erstrecken.

8. Gleisgurtanordnung für eine kreisförmige pneumatische Karkasse (10), die von einem flexiblen Gleisgurt (16, 116) umfaßt und betriebsmäßig damit verbunden ist, wobei ein Satz von Ankerplatten (24, 124) von dem Gleisgurt (16, 116) getragen wird und ferner ein Satz von Gleisschuhen (30, 195) an den Ankerplatten (24, 124) befestigt ist und radial nach außen von der Karkasse (10) ragt, gekennzeichnet durch mindestens einen der Sätze von Ankerplatten (124) oder Gleisschuhen (30) nach einem der Ansprüche 1—7.

9. Gleisgurtanordnung nach Anspruch 8, wobei jede Ankerplatte (24) starr ist und jeder Gleisschuh (30) flexibel ist.

10. Gleisgurtanordnung nach Anspruch 8, wobei jeder Gleisschuh (195) starr und jeder Ankerplatte (124) flexibel ist.

11. Gleisgurtanordnung nach Anspruch 8, wobei jeder Gleisschuh (30) und jede Ankerplatte (124) flexibel sind.

## Revendications

1. Patin flexible de roulement (30) pour un ensemble formant ceinture flexible de roulement comprenant:

un corps en élastomère ayant une paire de parties latérales (37, 38);

une paire de blocs espacés de montage (41, 42) ancrés dans ledit corps en élastomère, chaque bloc de montage (41, 42) étant placé généralement dans lesdites parties latérales (37, 38, 126, 127); et

un moyen de renforcement (60) s'étendant entre lesdits blocs de montage (41, 42) et qui leur est fixé pour retenir lesdits blocs de montage (41, 42) contre un mouvement vers l'extérieur l'un par rapport à l'autre.

2. Plaque flexible d'ancrage (124) pour un ensemble formant ceinture flexible de roulement comprenant:

un corps en élastomère ayant une paire de parties latérales (126, 127);

une paire de blocs espacés de montage (182, 183) ancrés dans ledit corps en élastomère, chaque bloc de montage (182, 183) étant placé généralement dans lesdites parties latérales (126, 127); et

un moyen de renforcement (189) s'étendant entre lesdits blocs de montage (182, 183), et qui leur est fixé, pour retenir lesdits blocs de montage (182, 183) contre un mouvement vers l'extérieur l'un par rapport à l'autre.

3. Patin flexible de roulement (30) ou plaque d'ancrage (124) selon la revendication 1 ou 2, où ledit moyen de renforcement est un moyen flexible de mise sous tension (60, 189).

4. Patin flexible de roulement (30) ou plaque d'ancrage (124) selon la revendication 3, où ledit moyen flexible de mise sous tension est en un matériau inextensible (60, 189).

5. Patin flexible de roulement (30) ou plaque d'ancrage (124) selon la revendication 1 ou 2, où ledit moyen de renforcement est un câble inextensible (189, 60).

6. Patin flexible de roulement (30) ou plaque d'ancrage (124) selon l'une des revendications 1 à 5, où chaque bloc de montage (41, 42, 182, 183) comprend un certain nombre d'organes formant goujons (56, 187) qui y sont montés, un moyen defixation (66, 67, 191, 192) pouvant être attaché audit bloc de montage (41, 42, 182, 183), ledit moyen de renforcement (60, 189) étant enroulé d'avant en arrière entre lesdits organes formant goujons (56, 187) des blocs respectifs de montage (41, 42, 182, 183) et y étant maintenu fixement par ledit moyen de fixation (66, 67, 191, 192).

7. Patin flexible de roulement (30) ou plaque d'ancrage (124) selon l'une des revendications 1 à 6, où chacun desdits blocs de montage (41, 42, 182, 183) comprend une partie élargie vers l'extérieur (46, 179) contenant un moyen d'ancrage (51, 52, 128) et ayant une partie échelonnée vers l'intérieur (48, 184) définissant une surface de support (50, 185) pour ledit moyen de renforcement d'où s'étendent lesdits organes formant goujons (56, 187).

8. Ensemble formant ceinture de roulement pour une carcasse de pneumatique circulaire (10), une ceinture flexible de roulement (16, 116) entourant ladite carcasse (10) et lui étant activement connectée; un jeu de plaques d'ancrage (24, 124) portées par ladite ceinture de roulement (16, 116) et un jeu de patins de roulement (30, 195) fixés auxdites plaques d'ancrage (24, 124) et faisant saillie radialement vers l'extérieur à partir de ladite carcasse (10), caractérisé en ce qu'au moins l'un desdits jeux de plaques d'ancrage (124) ou de patins de roulement (30) est selon l'une des revendications 1 à 7.

9. Ensemble formant ceinture de roulement selon la revendication 8, où chaque plaque d'ancrage (24) est rigide et chaque patin de roulement (30) est flexible.

10. Ensemble formant ceinture de roulement selon la revendication 8, où chaque patin de roulement (195) est rigide et chaque plaque d'ancrage (124) est flexible.

11. Ensemble formant ceinture de roulement selon la revendication 8, où chaque patin de roulement (30) et chaque plaque d'ancrage (124) sont flexibles.

FIG. 1

FIG. 2

FIG. 3

FIG. 4

FIG. 5

0 025 183

**FIG. 6**

**FIG. 7**

**FIG. 8**

2

FIG. 9

FIG. 10

FIG. II

FIG. 12

3